(19) Europäisches Patentamt
European Patent Office
Office européen des brevets

(11) **EP 2 053 831 B1**

(12) **EUROPEAN PATENT SPECIFICATION**

(45) Date of publication and mention
of the grant of the patent:
**07.09.2016 Bulletin 2016/36**

(51) Int Cl.:
***H04L 29/08*** *(2006.01)*

(21) Application number: **07291307.2**

(22) Date of filing: **26.10.2007**

(54) **Method for caching content data packages in caching nodes**

Verfahren zum Zwischenspeichern von Inhaltsdatenpaketen in Zwischenspeicherknoten

Procédé de cache de paquets de données de contenu dans des noeuds de cache

(84) Designated Contracting States:
**AT BE BG CH CY CZ DE DK EE ES FI FR GB GR HU IE IS IT LI LT LU LV MC MT NL PL PT RO SE SI SK TR**

(43) Date of publication of application:
**29.04.2009 Bulletin 2009/18**

(73) Proprietor: **ALCATEL LUCENT**
**92100 Boulogne-Billancourt (FR)**

(72) Inventors:
• **Kisel, Andrey**
**Maidenhead**
**Berkshire SL6 8DH (GB)**
• **Robinson, David Cecil**
**Woodsend**
**Aldbourne**
**Wiltshire SN8 2NP (GB)**

(74) Representative: **Berthier, Karine et al**
**Alcatel-Lucent International**
**148/152, route de la Reine**
**92100 Boulogne-Billancourt (FR)**

(56) References cited:
**WO-A-2004/049717     US-A- 5 898 456**

• **YOUNGSU CHAE ET AL: "Silo, Rainbow, and Caching Token: Schemes for Scalable, Fault Tolerant Stream Caching" IEEE JOURNAL ON SELECTED AREAS IN COMMUNICATIONS, IEEE SERVICE CENTER, PISCATAWAY, US, vol. 20, no. 7, September 2002 (2002-09), XP011065523 ISSN: 0733-8716**
• **XIANG Z ET AL: "Peer-to-Peer Based Multimedia Distribution Service" IEEE TRANSACTIONS ON MULTIMEDIA, IEEE SERVICE CENTER, PISCATAWAY, NJ, US, vol. 6, no. 2, April 2004 (2004-04), pages 343-355, XP011109145 ISSN: 1520-9210**
• **BANAEI-KASHANI F ET AL: "Decentralized resource management for a distributed continuous media server" IEEE TRANSACTIONS ON PARALLEL AND DISTRIBUTED SYSTEMS, IEEE SERVICE CENTER, LOS ALAMITOS, CA, US, vol. 13, no. 11, November 2002 (2002-11), pages 1183-1200, XP011095162 ISSN: 1045-9219**

**Description**

Background of the invention

The invention relates to a method for caching content data packages in caching nodes (superpeers) of a network comprising a plurality of nodes and a plurality of data lines that extend between adjacent of said nodes, wherein content data traffic is to be delivered on traffic connections between a content data library server and user nodes (peers)

In a traditional Internet Protocol Television (IPTV) system, all the content is typically located at a centralised library server, i.e. stored at the library server as content data packages, or ingested at a centralised ingest point. A Content Distribution Network (CDN) is used to distribute the content from the library server to streaming servers located close to the network edges. If a user wants to view a content that is not available at the edge streaming server, the request is either served by the library server or rejected.

There are two known distribution models: content everywhere and dynamic redistribution. In the first model, pre-selected content, i.e. content data packages, from the library server is distributed to all streaming servers ahead of time. The content is periodically rotated. In the second model, the content is initially distributed to all streaming servers ahead of time. However, the library server can re-distribute the content based upon usage statistic. For example, if a number of requests have been received for the edge streaming server where the content is not available, the centralized server pushes the content to the streaming server and the following requests are served from there.

An emerging alternative approach to real-time IPTV streaming, attracting industry interest, is based on peer-to-peer (P2P) distribution networks. If a P2P distribution network is enhanced by caching overlay to improve the distribution quality, it is called super P2P. Both current P2P networks and current super P2P (SP2P) networks do not provide sufficient quality for real-time media, e.g. video data, delivery.

The best known solution for the traditional IPTV content distribution model uses real-time content distribution technique from the central library server to the streaming servers. This technique is called 'stream through'. According to said technique, if the content is not available at the streaming server (streamer array), streamer arrays request in the real-time content segments from the library server (vault array). Then the streamer immediately delivers the content down to a Set Top Box (STB) and caches it for subsequent requests, which are served from the cache. Some optimizations are applied, e.g. pro-active cache filling.

Alternative known CDN implementation is based upon optimised proprietary overlay distribution network with dynamic path re-establishment for resilient media delivery to the edge streaming servers.

The best known solution for the super P2P video delivery is based upon deploying caching nodes close to the edge locations and is not suitable for real-time viewing experience. According to this technique, caching nodes are used to improve P2P distribution by providing accessible storage for the most popular data in the network with high bandwidth.

The first solution relies on high quality core network to enable real-time distributions between the library and streaming servers for the real-time video content. The distribution delay typically should not exceed some hundred milliseconds, which requires high quality thus expensive core network. That core network may not be available in some cases. The second disadvantage is that cache is filled in response to user demand, which creates a bottleneck for both long tail content and large change in demand, e.g. a large number of new highly popular assets can cause initial service rejection until the content is cached on all edges. The volume of content churn means there is insufficient network bandwidth to distribute all content when it is loaded. The solution is expensive, with the main cost contributors being the cost of vault array/streamers using proprietary software and the high quality core network, as discussed above.

The cost drawback of the first solution is resolved by the second solution, i.e. super P2P. SP2P works over public internet networks with relatively inexpensive equipment. However, the main disadvantage of the existing SP2P is that they cannot deliver real-time content and are not designed to take into account real-time service requirements. In addition, volume of content (long tail) means one cannot store all content everywhere.

Object of the invention

It is therefore an object of the invention to provide a method for caching content data packages in caching nodes, which overcomes at least one of the problems associated with the related art, in particular which improves efficiency of SP2P networks to enable the delivery of live video and real-time services.

Short description of the invention

This object is achieved, in accordance with the invention, by a method according to claim 1 for caching content data packages in caching nodes of a network comprising a plurality of nodes and a plurality of data lines that extend between adjacent of said nodes, wherein content data traffic is to be delivered on traffic connections between a content data library server, caching nodes and user nodes. I.e. The content data traffic is to be routed on traffic connections between a content data library server and user nodes, which is not only to be understood as the usual meaning of the word "route": selecting a route in a network to send data. The term is associated with physical delivery. In case of the present invention the word "route" covers the following functionality: let's assume there is a layer of caches in the network to improve traffic - 'how populate this layer of caches to optimise network usage?'. Push and pull delivery are possible. In pull mode the caches or peers who need the content piece would request it from the caching nodes.

The inventive method is comprising the following steps:

- Assigning a popularity value of each content data package, segment or piece to each caching node having at least one user node as an adjacent node, therefore different popularities in different areas where the nodes are positioned can be considered for defining the popularity value to be assigned. In case of the inventive method a wide meaning of "package" is used. Traditionally package is associated with small amount of data, e.g. UDP packet. This is a small unit for building popularity density, alternatively larger segment or whole piece can be evaluated for popularity and cached.

- Calculating a weighted request probability for each content data package at each caching node, preferably by combining each popularity value with a distance from the respective caching node to the caching node to which the respective popularity value is assigned to. Said request probability is proportional to said assigned popularity values.
- Deciding which of the weighted request probabilities of the content data packages are fulfilling a predefined condition. Therefore a caching decision is made, e.g. according to a predefined formula.
- The respective content data packages are cached in the caching nodes at which the weighted request probability of the content data package fulfils said predefined condition.

The inventive method improves efficiency of SP2P networks to enable the delivery of live video and real-time services as content data packages by introducing layering into popularity aggregations and intelligently caching on different 'popularity' layers. Therefore, the efficiency of managed on-demand content delivery network, preferably super peer-to-peer network SP2P or caching overlay network, is improved by introducing layering into popularity aggregations and intelligently caching on different hierarchical layers.

The inventive method is leading to an implementation of the following two ideas:

The first idea is to introduce hierarchical popularity layers with horizontal mesh interconnections into media or media segment caching and place caching nodes at the popularity aggregation layers (overlay network). Next step is to apply popularity density to decide whether media (or media segment) should be cached and at which layer as described below. Typically the closest to the user caching node with the weighted highest popularity density should cache or be selected for caching.

The second idea is to advance overlay network suggested in the first idea by pro-actively filling the caches based upon popularity topology discovered during the first idea. In one of the embodiments, presented for illustration, popularity topology for a given genre can be derived from the self-adjusted caching topology. Then genre popularity topology can be used to pro-actively fill the caches with media from the same genre and high estimated popularity.

The inventive method has the following advantages:

- it improves the efficiency of content delivery over public internet networks;
- leads to optimised SP2P networks for real-time services;
- allows traditional IPTV services such as video on demand, broadcast TV, network PVR, live-pause TV over public internet networks or SP2P networks;
- removes the cost of the distributed video servers and high quality core network from IPTV services;
- takes media properties into account for efficient content delivery;
- places resource as media assets and/or segments where they are mostly required and valued;
- reduces capital and operation cost for the next generation of IPTV services;
- is based upon widely available internet networks;
- enables content owners to reach directly end users;
- presents standardisation potential for NGN release 2;
- the inventive method optimises SP2P and/or open internet networks for real-time traditional IPTV services and is of interest for IPTV vendors, as well as to cable companies expanding into IPTV market.

Preferred variants of the invention

A particularly preferred variant of the inventive method is characterized in that after a period of time said popularity values are reassigned by new popularity values, wherein the new popularity values are evaluated proportionally to a frequency of usage of the content data packages during said period of time. Therefore a re evaluating of initially assigned popularity values based upon actual usage data can be achieved.

Preferably, the weighted request probability of the content data packages is calculated by summing up the results of said combining for different caching nodes and/or user nodes. Therefore data may be cached in nodes without adjacent peers in an appropriate way according to said ideas listed above. Any node of the network may be used as a caching node. The caching nodes are defined by the fact that they are caching said content data packages for delivery to at least one of the peers of the network. Delivery can be in push or pull modes as discussed on page 1.

If said weighted request probability for each content data package is calculated by each caching node and the said decision is made by the caching nodes which calculated the request probability a decentralized management of the network is made possible.

Preferably, the weighted request probabilities for content data packages, i.e. a weighted request probability threshold for caching media, is requested and/or updated from external sources, preferably from said data library server (library node). Therefore, when new high popularity content is added, it may push less popular media from the cache.

The inventive method preferably is used to cache content data packages comprising live video data and/or real-time service data.

In a preferred variant of the inventive method said weighted request probabilities for the content data packages are calculated by a data distribution node and the said decision is made by said data distribution node, wherein said content data packages are -pushed to the caching nodes for which the weighted request probability of the content data packages fulfil said predefined condition before the respective content data packages, i.e. new multimedia assets, are requested by or pushed to a user node which requested at least one of the respective content data packages. Therefore a pro-active caching of the content data packages is made possible.

In the letter case preferably said data distribution node is comprising said content data library server. Therefore the content data library server may act as a central node for managing the network.

Preferably upon a request for content data packages cached in at least two of said caching nodes to be delivered to a user node of said user nodes, the respected content data packages are delivered in push or pull modes to said user node from both caching nodes either in parallel or sequentially. Therefore a serving request for content data packages from multiple sources is made possible, which is advantageous if two caching nodes each serving partly overlapping group of cache users are present. Non-overlapping parts of the group can generate peak load at different peak times. Having media segments, i.e. content data packages, on different caching nodes allows to select the node with the least current peak load. Alternatively, if one of the nodes becomes busy it can pass the distribution to other caching nodes and focus on new requests for content data packages, e.g. from peers of the network.

Also within the scope of the invention is a computer program comprising means for performing the inventive method when run and/or stored on a computer system.

The inventive method can be implemented on generic purpose computers (hardware) as well as incorporated into edge equipment, e.g. edge and aggregated caching nodes, such as DSLAM/ISAM and routers.

Further advantages can be extracted from the description and the enclosed drawing. The features mentioned above and below can be used in accordance with the invention either individually or collectively in any combination. The embodiments mentioned are not to be understood as exhaustive enumeration but rather have exemplary character for the description of the invention.

Drawing and detailed description of the invention

The invention is illustrated in the drawings.

Fig. 1   illustrates a managed content distribution network with multiple aggregation levels for caching being arranged for carrying out the inventive method;

Fig. 2   illustrates the servicing of some requests from multiple sources according to a preferred embodiment of the invention;

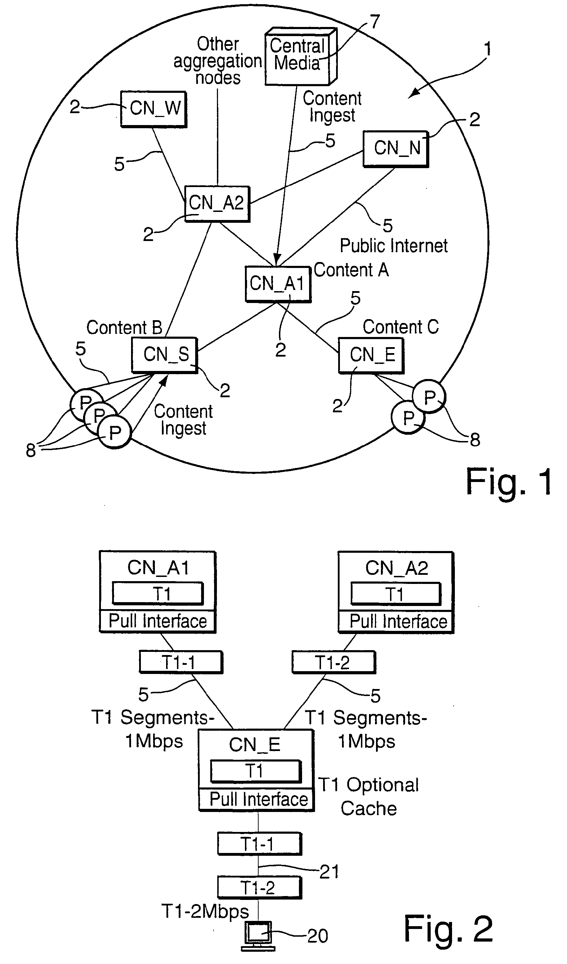

Fig. 1 illustrates a network 1 being designed to carry out the inventive method for caching content data packages in caching nodes 2 of a the network 3. The network 1 is comprising a plurality of nodes and a plurality of data lines 5 that extend between adjacent of said nodes. Content data traffic is to be routed on traffic connections between a content data library server 7 and user nodes 8, i.e. client nodes or peers. To explain the inventive method a sample algorithm will be illustrated. The proposed algorithm aims at presenting the generic solution rather than particular algorithms for popularity topology generation or caching.

In the figure client nodes or peers, an example of which can be STB, are connected to the edge caching nodes called caching node south CN_E, east CN_E, west CN_W and north CN_N. Those caching nodes are in turn connected to caching nodes on higher aggregation layers CA_1, CN_2, ... CN_N.

The media assets are initially stored as content data packages at the central media store, i.e. a content data library, which can either be in a single location or distributed over multiple locations.

According to the first idea described above, when the content data is delivered to a peer each superpeer distribution node aggregating segments from other nodes makes the decision to cache the content based upon content popularity density, derived from a popularity value, i.e. for example multiple popularity levels introduced to the content data packages, of each content data package assigned to each caching node having at least one user node as an adjacent node and distance to the requested peers.

One of the definitions of "popularity DENSITY" is popularity per number of users. For example, a movie A has been requested 100 times for the Area A and 100 times for the Area B. There are 1000 users in the area A and 10000 in the area B. In this example, in spite of recording the same number of requests, the popularity density would be higher 10 times in the Area A then in the Area B.

"Popularity levels" mean the said "popularity densities" are subdivided into a number of levels, e.g. by different levels of the popularity density.

For example, the caching decision can be based on whether the popularity density is sufficiently high compared to the nodes close to customer locations.

In general a weighted request probability for each content data package at each caching node is calculated, for example by combining each popularity value with a distance from the respective caching node to the caching node to which the respective popularity value is assigned to.

To make a caching decision it is decided which of the weighted request probabilities of the content data packages are fulfilling a predefined condition, for example expressed by the formula below.

The decision whether to cache the content can either be made by the superpeer node itself, or by the central library server or other agent or jointly by the superpeer node and the library server. For example, the superpeer node can request the library server for popularity topology of surrounding nodes before making the decision.

Introduction of layering into the popularity topology can be illustrated by the further example. E.g. three pieces of content A, B, C are equally popular in the South-East area over-layed by caching nodes CN_E, CN_S, CN_A1. The content B is popular in the South, C in the East and A is less popular in the South and East, but popular over aggregated area South-East.

In the context of this proposal we apply a wide meaning of the popularity being based upon any combination of the following factors, but not limited to the list below

- box office or other external popularity marker
- genre
- profile of users - knowing who likes what and where
- historical data
- categorization of content, e.g. if making available in 'My Own TV' community
- monitoring recommendations to estimate where content will be needed
- others

These factors are examples for features being the background for defining the weighted request probability for each content data package, i.e. a probability for each content data package to be requested by different peers.

In this case, by introducing caching nodes CN_S, CN_E and CN_A1, delivery of content A,B,C can be optimized to the South East area by caching B on CN_S, C on CN_E and A at aggregation caching layer above - CN_1. This would optimize the efficiency of CN_S and CN_E caches by maximizing cache hit ratio - more requests delivered from the cache than requested from outside.

As illustrated above, the first idea improves efficiency of the SP2P content delivery by introducing multiple popularity levels enabling to efficiently place resource such as content and load in the places, where they are mostly required and valuable for the real-time services.

The second idea stated above further advances the first idea by pro-actively filling the caches for new multimedia assets, for example, based upon popularity topology discovered during performing the steps of the inventive method, i.e. a method according to the first idea stated above. In one of the embodiments, a popularity topology map for a given genre is derived from the media popularity topology. The map is used to pro-actively fill the caches for the new media in the same genre category. For example, the library server or external agent can decide to move new content, i.e. content data packages, D to the caching node CN_A1 if it has the same genre and rating as A, which further improves the efficiency of the open network towards enabling real-time services.

One embodiment of the algorithm for caching in the first idea is illustrated below giving an example for a formula being the basis for the caching decision. If $D_n$ is the distance from $n$-$th$ caching node to the requested peer, e.g. number of nodes in between, $R_n$ is the observer or predicted number of requests for the asset at the node $n$, i.e. a request probability proportional to the popularity value of content data packages. Then the asset, i.e. the content data packages, should be cached at one or more node(s) K with the highest weighted popularity density: i.e. where the weighted request probability:

$$K \in \approx \underset{N}{MAX} \left\{ R_n \frac{1}{D_n - 1}, n \in 1..nodes\_in\_the\_path \right\}.$$

Meaning the content should be cached in nodes K having a value of the weighted request probability p, defined by the expression in brackets, in a region around the maximum of p of all nodes defining the predefined condition which is fulfilled by the caching nodes where the content data packages are to be cached according to the inventive method. Therefore it is taken into account that several peers with multiple access paths can be requesting the same segment, i.e. content data package. So the caching node optimally placed to serve all peers should be selected. This is in a simplified way expressed by the equation.

Fig. 2 illustrates a further optimization of the inventive method which can be applied by servicing some requests from multiple sources. This increases fill time of a cache but offload load from a single network link allowing to trade time for link capacity.

Upon a request from a STB 20 as a peer for the content data package T1 cached in the shown two caching nodes CN_A1 and CN_A2, the content data package is to be delivered to the STB as a user node. The respective content data packages are delivered to said user node from both caching nodes either in parallel or sequentially traversing the caching node CN_E having a content data cache for T1 optionally. All shown caching nodes are used as pull interfaces. The content data package T1 is sub divided in segments T1-1 and T1-2 which are transmitted over data lines 5 using a data transmission rate of 1 Mbps for example. The content data package T1 including both segments T1-1 and T1-2 is transmitted from CN_E to the shown STB over a data line 21 using a data transmission rate of 2Mbps for example.

A method for caching content data packages in caching nodes 2 of a network 1 comprising a plurality of nodes 2,8 and a plurality of data lines 5 that extend between adjacent of said nodes 2,8, wherein content data traffic is to be delivered on traffic connections between a content data library server 7 and user nodes 8 is proposed.

The method is comprising the steps of

-    assigning a popularity value of each content data package to each caching node 2 having at least one user node 8 as an adjacent node,

-    calculating a weighted request probability for each content data package at each caching node 2, preferably by combining each popularity value with a distance from the respective caching node 2 to the caching node to which the respective popularity value is assigned to,

-    deciding which of the weighted request probabilities of the content data packages are fulfilling a predefined condition, and

-    caching the respective content data packages in the caching nodes at which the weighted request probability of the content data package fulfils said predefined condition.

The suggested solution improves the efficiency of content delivery over public internet networks by introducing multiple popularity levels, intelligently caching on different 'popularity' layers and enabling efficient placement/usage of resources where they are mostly required and valued. It allows to use public networks overplayed by cost efficient layered caching infrastructure for traditional IPTV services such as video on demand, broadcast TV, network PVR, live-pause TV. Another advantage of the solution is that it does not require network of video servers and high quality core networks as in prior art. The proposed invention improves the efficiency of SP2P network generally enabling delivery of life video and real-time services.

**Claims**

1.    A method for caching content data packages in caching nodes (2) of a network (1) comprising a plurality of nodes (2,8) and a plurality of data lines (5) that extend between adjacent of said nodes (2,8), wherein content data traffic is to be routed and/or delivered on traffic connections between a content data library server (7) and user nodes (8), comprising the steps of

- assigning a popularity value of each content data package to each caching node (2) having at least one user node (8) as an adjacent node,
- calculating a weighted request probability for each content data package at each caching node (2), including caching nodes on higher aggregation layers without connections to the user nodes (8),
- deciding which of the weighted request probabilities of the content data packages are fulfilling a predefined condition, and
- caching the respective content data packages in the caching nodes at which the weighted request probability of the content data package fulfils said predefined condition, wherein the weighted request probability is calculated by combining each popularity value with a distance from the respective caching node (2) to the caching node to which the respective popularity value is assigned to, and

upon a request from a user node (8) for a content data package (T1) cached in at least two of said caching nodes (CN_A1, CN_A2) on said higher aggregation layers, the content data package (T1) is sub-divided in segments (T1-1, T1-2) which are transmitted in parallel or sequentially from said at least two caching nodes (CN_A1, CN_A2) on said higher aggregation layers to a further caching node (CN_E) having said user node (8) as an adjacent node, the further caching node (CN_E) transmitting the content data package (T1) including both segments (T1-1, T1-2) to said user node (8).

2. The method according to claim 1, **characterised in that** after a period of time said popularity values are reassigned by new popularity values, wherein the new popularity values are evaluated proportionally to a frequency of usage of the content data packages during said period of time.

3. The method according to claim 1, **characterised in that** the weighted request probability of the content data packages is calculated by summing up the results of said combining for different caching nodes and/or user nodes.

4. The method according to claim 1, **characterised in that** said weighted request probability for each content data package is calculated by each caching node and the said decision is made by the caching nodes which calculated the request probability.

5. The method according to claim 1, **characterised in that** the weighted request probabilities for content data packages is requested and/or updated from external sources, preferably from said data library server.

6. The method according to claim 1, **characterised in that** the content data packages are comprising live video data and/or real-time service data.

7. The method according to claim 1, **characterised in that** said weighted request probabilities for the content data packages are calculated by a data distribution node and the said decision is made by said data distribution node, wherein said content data packages are routed and/or delivered to the caching nodes for which the weighted request probability of the content data packages fulfil said predefined condition before the respective content data packages are routed and/or delivered to a user node which requested at least one of the respective content data packages.

8. The method according to claim 7, **characterised in that** said data distribution node is comprising said content data library server.

9. Computer program comprising means for performing the method of one of the claims 1 to 8 when run and/or stored on a computer system.

**Patentansprüche**

1. Verfahren für das Zwischenspeichern von Datenpaketen in Zwischenspeicherknoten (2) eines Netzwerks, eine Vielzahl von Knoten (2,8) und eine Vielzahl von Datenleitungen (5) umfassen, die sich zwischen Adjazenten der besagten Knoten (2,8) erstrecken, wobei auf Verkehrsverbindungen zwischen einem Inhaltsdaten-Bibliotheksserver (7) und Benutzerknoten (8) Inhaltsdatenverkehr zu routen und/oder auszuliefern ist, die folgenden Schritte umfassend:

- das Zuweisen eines Beliebtheitswerts für jedes Inhaltsdatenpaket an jeden Zwischenspeicherknoten (2), dem zumindest ein Benutzerknoten (8) als adjazenter Knoten zugewiesen ist,
- das Berechnen einer gewichteten Abfragewahrscheinlichkeit für jedes Inhaltsdatenpaket an jedem Zwischenspeicherknoten (2) einschließlich Zwischenspeicherknoten auf höheren Aggregationsebenen ohne Verbindung zu den Benutzerknoten (8),
- das Entscheiden, welche der gewichteten Abfragewahrscheinlichkeiten der Inhaltsdatenpakete die vordefinierte Bedingung erfüllen, und
- das Zwischenspeichern der betreffenden Inhaltsdatenpakete in den Zwischenspeicherknoten, bei denen die gewichtete Abfragewahrscheinlichkeit des Inhaltsdatenpakets besagte, vordefinierte Bedingung erfüllt, wobei die gewichtete Abfragewahrscheinlichkeit berechnet wird durch das Kombinieren eines jeden Beliebtheitswerts mit einem Abstand zwischen dem betreffenden Zwischenspeicherknoten (2) und dem Zwischenspeicherknoten, dem der betreffende Beliebtheitswert zugewiesen ist, und

auf die Anfrage eines Benutzerknotens (8) nach einem Inhaltsdatenpaltet (T1) hin, welches in mindestens zwei der besagten Zwischenspeicherknoten (CN_A1, CN_A2) auf besagten, höheren Aggregationsebenen gespeichert ist, das Unterteilen des Inhaltsdatenpakets (T1) in Segmente (T1-1, T1-2), welche parallel der sequentiell von den besagten, mindestens zwei Zwischenspeicherknoten (CN_A1, CN_A2) auf den besagten, höheren Aggregationsebenen an einen weiteren Zwischenspeicherknoten (CN_E) übermittelt werden, welcher besagten Benutzerknoten (8) als adjazenten Knoten hat, wobei der weitere Zwischenspeicherknoten (CN_E) das beide Segmente (T1-1, T1-2) enthaltende Inhaltsdatenpaket (T1) an den besagten Benutzerknoten (8) übermittelt.

2. Das Verfahren nach Anspruch 1, **dadurch gekennzeichnet, dass** besagte Beliebtheitswerte nach einem Zeitraum durch neu zugeteilte Beliebtheitswerte ersetzt werden, wobei die neuen Beliebtheitswerte proportional zu einer Nutzungshäufigkeit der Inhaltsdatenpakete im Verlauf besagten Zeitraums evaluiert werden.

3. Das Verfahren nach Anspruch 1, **dadurch gekennzeichnet, dass** die gewichtete Abfragewahrscheinlichkeit des Inhaltsdatenpakets durch das Summieren der Ergebnisse besagten Kombinierens für verschiedene Zwischenspeicherknoten und/oder Benutzerknoten berechnet wird.

4. Das Verfahren nach Anspruch 1, **dadurch gekennzeichnet, dass** besagte gewichtete Abfragewahrscheinlichkeit für jedes Inhaltsdatenpaket von jedem Zwischenspeicherknoten berechnet wird und besagte Entscheidung von den Zwischenspeicherknoten getroffen werden, welche die Abfragewahrscheinlichkeit berechnet haben.

5. Das Verfahren nach Anspruch 1, **dadurch gekennzeichnet, dass** die gewichteten Abfragewahrscheinlichkeiten für Inhaltsdatenpakete von externen Quellen angefordert und/oder aktualisiert werden, vorzugsweise von besagtem Datenbibliotheksserver.

6. Das Verfahren nach Anspruch 1, **dadurch gekennzeichnet, dass** die Inhaltsdatenpakete Livevideodaten und/oder Echtzeitservicedaten umfassen.

7. Das Verfahren nach Anspruch 1, **dadurch gekennzeichnet, dass** besagte gewichtete Abfragewahrscheinlichkeiten für die Inhaltsdatenpakete von einem Datenverteilungsknoten berechnet werden und die besagte Entscheidung von besagtem Datenverteilungsknoten getroffen wird, wobei besagte Inhaltsdatenpakete an die Zwischenspeicherknoten geroutet oder ausgeliefert werden, für welche die gewichtete Abfragewahrscheinlichkeit des Inhaltsdatenpakets besagte vordefinierte Bedingung erfüllt, ehe die entsprechenden Inhaltsdatenpakete an einen Benutzerknoten geroutet oder ausgeliefert werden, welcher mindestens eines der betreffenden Inhaltsdatenpakete angefordert hat.

8. Das Verfahren nach Anspruch 7, **dadurch gekennzeichnet, dass** wobei besagter Datenverteilungsknoten besagten Inhattsdaten-Bibliotheksserver umfasst.

9. Ein Computerprogramm, welches Mittel für das Ausführen des Verfahrens nach einem der Ansprüche 1 bis 8 umfasst, wenn es auf einem Computersystem ausgeführt und/oder gespeichert wird.

**Revendications**

1. Procédé pour la mise en antémémoire de paquets de données de contenu dans des noeuds de mise en antémémoire (2) d'un réseau (1) comprenant une pluralité de noeuds (2, 8) et une pluralité de lignes de données (5) s'étendant entre des noeuds adjacents parmi lesdits noeuds (2, 8), le trafic de données de contenu devant être acheminé et/ou livré sur des connexions de trafic entre un serveur de bibliothèque de données de contenu (7) et des noeuds d'utilisateur (8), comprenant les étapes suivantes :

- attribuer une valeur de popularité de chaque paquet de données de contenu à chaque noeud de mise en antémémoire (2) possédant au moins un noeud d'utilisateur (8) en tant que noeud adjacent,
- calculer une probabilité de demande pondérée pour chaque paquet de données de contenu au niveau de chaque noeud de mise en antémémoire (2), y compris des noeuds de mise en antémémoire sur des couches d'agrégation supérieures sans connexions avec les noeuds d'utilisateur (8),
- déterminer les probabilités de demande pondérées des paquets de données de contenu remplissant une condition prédéfinie, et
- mettre en antémémoire des paquets de données de contenu respectifs dans les noeuds de mise en antémémoire au niveau desquels la probabilité de demande pondérée du paquet de données de contenu remplit ladite condition prédéfinie, la probabilité de demande pondérée étant calculée par la combinaison de chaque valeur de popularité avec une distance entre le noeud de mise en antémémoire (2) respectif et le noeuds de mise en antémémoire auquel la valeur de popularité respective est attribuée, et

suite à une demande provenant d'un noeud d'utilisateur (8) pour un paquet de données de contenu (T1) mis en antémémoire dans au moins deux desdits noeuds de mise en antémémoire (CN_A1, CN_A2) sur lesdites couches d'agrégation supérieures, le paquet de données de contenu (T1) est sous-divisé en segments (T1-1, T1-2) qui sont transmis en parallèle ou de façon séquentielle depuis lesdits au moins deux noeuds de mise en antémémoire (CN_A1, CN_A2) sur lesdites couches d'agrégation supérieures vers un autre noeud de mise en antémémoire (CN_E) possédant ledit noeud d'utilisateur (8) en tant que noeud adjacent, l'autre noeud de mise en antémémoire (CN_E) transmettant le paquet de données de contenu (T1) comprenant les deux segments (T1-1, T1-2) audit noeud d'utilisateur (8).

2. Procédé selon la revendication 1, **caractérisé en ce que**
lesdites valeurs de popularité, après une période de temps, sont réattribuées par de nouvelles valeurs de popularité, les nouvelles valeurs de popularité étant évaluées en fonction d'une fréquence d'utilisation des paquets de données de contenu pendant ladite période de temps.

3. Procédé selon la revendication 1, **caractérisé en ce que** la probabilité de demande pondérée des paquets de données de contenu est calculée en additionnant les résultats de ladite combinaison pour différents noeuds de mise en antémémoire et/ou noeuds d'utilisateur.

4. Procédé selon la revendication 1, **caractérisé en ce que** ladite probabilité de demande pondérée pour chaque paquet de données de contenu est calculée par chaque noeud de mise en antémémoire et ladite détermination est effectuée par les noeuds de mise en antémémoire ayant calculé la probabilité de demande.

5. Procédé selon la revendication 1, **caractérisé en ce que** les probabilités de demande pondérées pour des paquets de données de contenu sont demandées et/ou mises à jour à partir de sources externes, de préférence à partir dudit serveur de bibliothèque de données.

6. Procédé selon la revendication 1, **caractérisé en ce que** les paquets de données de contenu comprennent des données vidéo en direct et/ou des données de service en temps quasi réel.

7. Procédé selon la revendication 1, **caractérisé en ce que** lesdites probabilités de demande pondérées pour les paquets de données de contenu sont calculées par un noeud de distribution de données et ladite détermination est effectuée par ledit noeud de distribution de données, lesdits paquets de données de contenu étant acheminés et/ou livrés aux noeuds de mise en antémémoire pour lesquels la probabilité de demande pondérée des paquets de données de contenu remplit ladite condition prédéfinie avant que les paquets de données de contenu respectifs ne soient acheminés et/ou livrés à un noeud d'utilisateur ayant demandé au moins un paquet de données de contenu parmi les paquets de données de contenu respectifs.

8. Procédé selon la revendication 7, **caractérisé en ce que** ledit noeud de distribution de données comprend ledit serveur de bibliothèque de données de contenu.

9. Programme informatique comprenant des moyens pour l'exécution du procédé de l'une des revendications 1 à 8 lorsqu'il est exécuté et/ou mémorisé sur un système informatique.

**Fig. 1**

**Fig. 2**